(19) Europäisches Patentamt
European Patent Office
Office européen des brevets

(11) **EP 2 551 394 A1**

(12) **EUROPEAN PATENT APPLICATION**
published in accordance with Art. 153(4) EPC

(43) Date of publication:
**30.01.2013 Bulletin 2013/05**

(51) Int Cl.:
***D04H 1/54*** *(2012.01)*

(21) Application number: **11759100.8**

(22) Date of filing: **09.02.2011**

(86) International application number:
**PCT/JP2011/053307**

(87) International publication number:
**WO 2011/118292 (29.09.2011 Gazette 2011/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2010 JP 2010070330**

(71) Applicant: Unicharm Corporation
**Ehime 799-0111 (JP)**

(72) Inventors:
• **YOSHIDA, Masaki**
**Kanonji-shi**
**Kagawa 769-1602 (JP)**
• **MIZUTANI, Satoshi**
**Kanonji-shi**
**Kagawa 769-1602 (JP)**

• **KONISHI, Takayoshi**
**Kanonji-shi**
**Kagawa 769-1602 (JP)**
• **NOZUMI, Hiroko**
**Kanonji-shi**
**Kagawa 769-1602 (JP)**

(74) Representative: **Murgatroyd, Susan Elizabeth et al**
**Baron Warren Redfern**
**Cambridge House**
**100 Cambridge Grove**
**Hammersmith**
**London**
**W6 0LE (GB)**

(54) **PROCESS FOR PRODUCTION OF POLYLACTIC ACID-BASED AIR-THROUGH NONWOVEN FABRIC, AND POLYLACTIC ACID-BASED AIR-THROUGH NONWOVEN FABRIC**

(57)     The invention provides a method of producing an air-through nonwoven fabric comprising the steps of: forming a web comprising composite fibers comprising a first polylactic acid and a second polylactic acid having a lower melting point than the melting point of the first polylactic acid; a step of exposing the web to a first air-through treatment in the temperature range of the following temperature $T_1$: glass transition temperature of second polylactic acid $< T_1 <$ melting point of second polylactic acid; and a step of exposing the web that has been exposed to the first air-through treatment, to a second air-through treatment in the temperature range of the following temperature $T_2$: melting point of second polylactic acid $- 5°C \leq T_2 \leq$ melting point of second polylactic acid $+ 15°C$, to produce an air-through nonwoven fabric, wherein the degree of crystallinity of the air-through nonwoven fabric is in the range of 44% to 68%.

EP 2 551 394 A1

**Description**

Technical Field

The present invention relates to a method of producing a polylactic acid-based air-through nonwoven fabric with an excellent feel and a low melting point, and minimal heat shrinkage during production, and to a polylactic acid-based air-through nonwoven fabric that has a low melting point.

Background Art

Nonwoven fabrics produced from thermoplastic polymers, such as polyolefins, polyesters and polyamides have conventionally been used as materials designed for medical and hygienic use, household use, and industrial use. Because such thermoplastic polymers are chemically stable in ordinary environments and are non-biodegradable, disposal of their nonwoven fabrics involves incineration or landfilling. Incineration is a problem from the standpoint of environmental protection because it causes release of large amounts of carbon dioxide. Landfilling is a problem because of poor decomposition in soil.

Nonwoven fabrics produced, from fibers that are biodegradable and have a high biomass percentage are being studied with the aim of solving the problem, and polylactic acid-based fibers are receiving focus as a potential solution mainly due to their high melting point. Polylactic acid is a biodegradable polymer that can be produced from plant sources, such as corn, and whereas the amount of carbon dioxide generated from production to incineration is about 4.0 kg/kg-polymer for crude oil-derived polyethylene and about 6.1 kg/kg-polymer for crude oil-derived polyesters, polylactic acid is known to have very low carbon dioxide generation from production to incineration, of about 0.3 kg/kg-polymer. The numerical values for polylactic acid are based on data published by NatureWorks (PLA6(2006/2007)), the numerical values for polyethylene are based on data published by the National Institute of Advanced Industrial Science and Technology, and the numerical values for polyesters are based on data published by Plastic Europe.

PTL 1 is one example of a document that discloses a nonwoven fabric produced from polylactic acid-based fibers. In PTL 1 there is disclosed a nonwoven fabric produced by needle punching or hydroentangling, but nonwoven fabrics produced by needle punching have a high basis weight structure and are therefore costly, while nonwoven fabrics produced by hydroentangling are associated with problems, such as liquid repellency and skin eruption, and are poorly suitable for disposable diapers, sanitary products and the like.

Nonwoven fabrics that are to be used in direct contact with the skin, such as disposable diapers and sanitary products, are most suitably air-through nonwoven fabrics from the viewpoint of a soft feel on the skin. However, attempting to produce an air-through nonwoven fabric suitable for a disposable diaper or sanitary product from polylactic acid-containing fibers leads to the following known problems.

Specifically, air-through nonwoven fabrics are Nonwoven fabrics produced by thermal sealing of the fibers by heat, and therefore a low melting point component is required to serve as the binder. For example, when a composite fiber composed of a core component made of polylactic acid and a sheath component made of polylactic acid with a lower melting point than the core component, is subjected to air-through treatment at a temperature above the melting point of the sheath component, the fiber undergoes heat shrinkage by the heat of the air-through treatment, leading to the problem of a notably inferior feel of the obtained nonwoven fabric.

Citation List

Patent literature

PTL 1 Japanese Unexamined Patent Publication No. 7-126970

Summary of Invention

Technical Problem

As explained above, production of air-through nonwoven fabrics from fibers comprising polylactic acid with a low melting point has been associated with heat shrinkage and reduced feel as a result.

It is therefore an object of the present invention to provide a method of producing a polylactic acid-based air-through nonwoven fabric with an excellent feel and a low melting point, and minimal heat shrinkage during production, and to a polylactic acid-based air-through nonwoven fabric that has a low melting point.

Solution to Problem

As a result of diligent research directed toward solving the problems described above, the present inventor have found a method of producing an air-through nonwoven fabric that comprises the steps of : forming a web comprising composite fibers comprising a first polylactic acid and a second polylactic acid having a lower melting point than the melting point of the first polylactic acid; exposing the web to a first air-through treatment in the temperature range of the following temperature $T_1$: glass transition temperature of second polylactic acid < $T_1$ < melting point of second polylactic acid; and exposing the web that has been exposed to the first air-through treatment, to a second air-through treatment in the temperature range of the following temperature $T_2$: melting point of second polylactic acid - 5°C $\leq T_2 \leq$ melting point of second polylactic acid + 15°C, wherein the degree of crystallinity of the air-through nonwoven fabric is in the range of 44% to 68%.

Specifically, the present invention relates to J1 to J18.

[J1]

A method of producing an air-through nonwoven fabric that comprises the steps of:

forming a web comprising composite fibers comprising a first polylactic acid and a second polylactic acid having a lower melting point than the melting point of the first polylactic acid;
exposing the web to a first air-through treatment in the temperature range of the following temperature $T_1$:
Glass transition temperature of second polylactic acid < $T_1$ < melting point of second polylactic acid; and
exposing the web that has been exposed to the first air-through treatment, to a second air-through treatment in the temperature range of the following temperature $T_2$:
Melting point of second polylactic acid - 5°C < $T_2 \leq$ melting point of second polylactic acid + 15°C,
wherein the degree of crystallinity of the air-through nonwoven fabric is in the range of 44% to 68%.

[J2]

The method according to J1, wherein temperature $T_1$ is in the range of melting point of second polylactic acid - 50°C $\leq T_1 \leq$ melting point of second polylactic acid - 10°C.

[J3]

The method according to J1 or J2, wherein temperature $T_2$ is in the range of melting point of second polylactic acid - 5°C $\leq$ T2 $\leq$ melting point of second polylactic acid + 10°C.

[J4]

The method according to any one of J1 to J3, wherein the step of exposure to the first air-through treatment and/or the step of exposure to the second air-through treatment is conducted for 20 to 120 seconds.

[J5]

The method according to any one of J1 to J4, wherein the melting point of the second polylactic acid is 20°C to 60°C lower than the melting point of the first polylactic acid.

[J6]

The method according to any one of J1 to J5, wherein the melting point of the first polylactic acid is in the range of 150°C to 190°C, and the melting point of the second polylactic acid is in the range of 110°C to 150°C.

[J7]

The method according to any one of J1 to J6, wherein the remaining area percentage of the air-through nonwoven fabric is at least 40% with respect to the web.

[J8]

The method according to any one of J2 to J7, wherein the biomass percentage of the air-through nonwoven fabric is in the range of 90-100%.

[J9]

The method according to any one of J1 to J8, wherein the composite fibers are core-sheath composite fibers or side-by-side composite fibers.

[J10]

The method according to any one of J1 to J9, wherein in the step of forming the web, a web is formed comprising the composite fibers and fibers of polylactic acid having a melting point that is higher than temperature $T_2$.

[J11]

The method according to any one of J1 to J10, further comprising, before the step of forming the web, a step of annealing the fibers in the temperature range of the following temperature $T_3$: glass transition temperature of second polylactic acid < $T_3$ < $T_1$.

[J12]

An air-through nonwoven fabric that is produced from composite fibers comprising a first polylactic acid and a second polylactic acid having a lower melting point than the melting point of the first polylactic acid, by way of a web comprising the composite fibers,
wherein the degree of crystallinity of the air-through nonwoven fabric is in the range of 44% to 68%.

[J13]

The air-through nonwoven fabric according to J12, wherein the melting point of the second polylactic acid is 20°C to 60°C lower than the melting point of the first polylactic acid.

[J14]

The air-through nonwoven fabric according to J12 or J13, wherein the melting point of the first polylactic acid is in the range of 150°C to 190°C, and the melting point of the second polylactic acid is in the range of 110°C to 150°C.

[J15]

The air-through nonwoven fabric according to any one of J12 to J14, wherein the remaining area percentage of the air-through nonwoven fabric is at least 40% with respect to the web.

[J16]

The air-through nonwoven fabric according to any one of J12 to J15, wherein the biomass percentage is in the range of 90-100%.

[J17]

The air-through nonwoven fabric according to any one of J12 to J16, wherein the composite fibers are core-sheath composite fibers or side-by-side composite fibers.

[J18]

The air-through nonwoven fabric according to any one of J12 to J17, wherein the web further comprises fibers of polylactic acid having a melting point that is higher than temperature $T_2$.

Advantageous Effects of Invention

The air-through nonwoven fabric with a low melting point produced by the method of the invention has low heat shrinkage during production and an excellent feel.

In addition, the air-through nonwoven fabric with a low melting point produced by the method of the invention has a high biomass percentage and is biodegradable, and therefore has high environmental suitability.

Description of Embodiments

The method of producing an air-through nonwoven fabric, and the air-through nonwoven fabric of the invention, will now be explained in detail.

In the composite fibers comprising a first polylactic acid and a second polylactic acid, to be used for the invention, the first polylactic acid and second polylactic acid have different melting points. The melting point of polylactic acid can be modified by adjusting the ratio of the D-form and L-form optical isomers of the lactic acid starting material.

For example, by conducting copolymerization with a D-form:L-form molar ratio of 50:50, it is possible to produce polylactic acid with a melting point of approximately 190°C to 220°C. Similarly, polylactic acid with a melting point of approximately 170°C is produced by copolymerization of a mixture with an L-form:D-form molar ratio of 99:1, polylactic acid with a melting point of approximately 150°C is produced by copolymerization of a mixture with an L-form:D-form molar ratio of 97:3, polylactic acid with a melting point of approximately 130°C is produced by copolymerization of a mixture with an L-form:D-form molar ratio of 92:8, and polylactic acid with a melting point of approximately 110°C is produced by copolymerization of a mixture with an L-form:D-form molar ratio of 88:12.

If the molar ratio of the D-form is about 18 mol% or greater, the polylactic acid will not exhibit a distinct melting point and an amorphous polymer with a softening temperature of lower than about 90°C will be obtained. For such an amorphous polylactic acid, the visually confirmed softening temperature is treated as the melting point for convenience. The melting point can be measured using a differential scanning calorimeter. The melting point may be measured using a Model DSC-60 DSC measuring apparatus by Shimadzu Corp., for example, with temperature increase of 10°C/min.

The melting point of the second polylactic acid is preferably about 20°C to 60°C lower, and more preferably about 30°C to 50°C lower, than the melting point of the first polylactic acid. If it is attempted to lower the melting point of the second polylactic acid by more than about 60°C below the melting point of the first polylactic acid, the proportion of the D-form will increase, thus tending to result in reduced bulk during heating, while if the difference between the melting point of the first polylactic acid and the melting point of the second polylactic acid is less than about 20°C, their melting points will be too close, requiring a more strict and impractical level of temperature control during air-through treatment.

The first polylactic acid preferably has a melting point of between about 150°C and 190°C, and more preferably a melting point of between about 160°C and 180°C. If the melting point is lower than about 150°C it will be difficult to ensure a difference with the melting point of the second polylactic acid, making it technically difficult to produce polylactic acid with a melting point of higher than about 190°C.

The first polylactic acid preferably has a weight-average molecular weight of about 60,000 or greater, and more preferably a weight-average molecular weight of between about 100,000 and about 300,000. If the weight-average molecular weight is less than about 60,000 the fiber strength may be reduced, and if the weight-average molecular weight is greater than about 300,000 the biodegradability of the air-through nonwoven fabrics produced according to the invention may be impaired.

The second polylactic acid preferably has a melting point of between about 110°C and about 150°C, and more preferably a melting point of 120°C to 140°C. If the melting point is lower than about 110°C the nonwoven fabric may not easily exhibit bulk during air-through treatment, while if the melting point is higher than about 150°C it will be difficult to ensure a difference with the melting point of the first polylactic acid.

The second polylactic acid preferably has a weight-average molecular weight of about 50,000 or greater, and more preferably a weight-average molecular weight of between about 60,000 and about 90,000. If the weight-average molecular weight is less than about 50,000 the fiber strength will tend to be reduced, and if the weight-average molecular weight is greater than about 90,000, it will be necessary to increase the weight-average molecular weight of the first polylactic acid, from the viewpoint of the final fiber strength, which may reduce the silk reeling property.

The proportion of the first polylactic acid and second polylactic acid in the composite fiber used for the invention is preferably a proportion of first polylactic acid:second polylactic acid = about 70:30 to about 30:70 and more preferably about 60:40 to about 40:60, as the mass ratio. If the proportion of the first polylactic acid is lower than about 30%, excessive heat sealing and excessive heat shrinkage may take place during the second air-through treatment, and if the proportion of the first polylactic acid is higher than about 70%, the heat sealing may be inadequate during the second air-through treatment.

The form of the composite fiber is not particularly restricted so long as the fiber comprise the first polylactic acid and second polylactic acid in the single fibers, for example, it may be core-sheath fiber with the first polylactic acid as the core and the second polylactic acid as the sheath, or side-by-side fiber.

The fiber length of the composite fiber is preferably between 30 mm and 70 mm.

The fiber size of the composite fiber is preferably between 2 dtex and 6 dtex.

The composite fiber may be, for example, one of the commercially available Terramac Series, such as PL80, by Unitika, Ltd.

The degree of crystallinity of the air-through nonwoven fabric is in the range of about 44% to about 68%. If the degree of crystallinity is lower than about 44%, the degree of crystallinity during the first air-through treatment will be insufficient and the heat shrinkage during the second air-through treatment will be increased, potentially impairing the feel of the air-through nonwoven fabric that is produced, while if the degree of crystallinity is higher than about 68%, the degree of crystallinity may be too high and the feel of the air-through nonwoven fabric may be impaired.

The "degree of crystallinity" is the value measured using whole-angle qualitative analysis based on powder X-ray diffraction.

[Apparatus] RAD-RB RU-200 X-ray diffraction analyzer by Rigaku Corp.

[Sample] Cut nonwoven fabric attached to aluminum sheet (20 mm length x 15 mm width).

[Measuring conditions]

- Target: Cu
- Slit: Divergence slit 1°

  Receiving slit: 0.3 mm
  Scattering slit 1°

- Filter: Monochro
- Scan speed: 4°/min
- Sampling angle: 0.02°

[Calculation of degree of crystallinity]

The crystalline peak ($2\theta$ = approximately 16°) and the amorphous peak were separated using analysis software. Next, the degree of crystallinity (Xc) was calculated from the crystalline scattering intensity (Ic) and the amorphous scattering intensity (Ia), as the integrated intensity for each peak, using the following formula:

$$Xc(\%) = 100 \times Ic/(Ic+Ia).$$

The air-through nonwoven fabric preferably has a remaining area percentage of at least about 40%, more preferably at least about 50% and most preferably at least about 55%, with respect to the web comprising the composite fibers. The "remaining area percentage" is the value calculated by the following formula:

$$\text{Remaining area percentage } (\%) = 100 \times (\text{area of sheet after second air-through treatment}) \div (\text{area of untreated web sheet}),$$

for a sheet cut out to a prescribed size from the web and exposed to first air-through treatment and second air-through treatment.

In order to reduce heat shrinkage during production, the air-through nonwoven fabric may further comprise fibers of polylactic acid having a higher melting point than temperature $T_2$ for the second air-through treatment (hereunder referred to as "third polylactic acid").

The third polylactic acid may have an adjusted ratio of the D-form or L-form of the optically active lactic acid monomer, as explained above.

In order to reduce heat shrinkage in the second air-through treatment, the third polylactic acid has a melting point that is higher than temperature $T_2$ for the second air-through treatment, and preferably it has a melting point of at least about 10°C higher, more preferably a melting point of at least about 30°C higher and even more preferably a melting point of at least about 40°C higher than temperature $T_2$ for the second air-through treatment.

When temperature $T_2$ is 130°C, the third polylactic acid preferably has a melting point of about 140°C or higher, more preferably a melting point of about 150°C or higher and even more preferably a melting point of about 160°C or higher.

The fiber of the third polylactic acid may have the same fiber length and fiber size as the composite fiber.

The fiber of the third polylactic acid is present at preferably no greater than about 40 mass%, more preferably no greater than about 30 mass% and even more preferably no greater than about 20 mass% of the total fiber, so that heat sealing during the air-through treatment will not be insufficient.

The air-through nonwoven fabric has a biomass percentage in the range of about 90% to about 100%, and preferably about 100%.

As used herein, "biomass percentage" refers to the percentage of organic sources in the nonwoven fabric, with respect to the total mass of petroleum-produced fossil fuel sources and renewable bio-derived organic sources.

In the method of producing an air-through nonwoven fabric according to the invention, the step of forming a web comprising the composite fiber allows formation of a sheet-like web with the desired basis weight, from raw stock of composite fiber comprising the first polylactic acid and second polylactic acid, using a device known in the technical field, such as a carding machine.

When the air-through nonwoven fabric further includes fiber of the third polylactic acid in addition to the composite fiber comprising the first polylactic acid and second polylactic acid, the composite fiber and the fiber of the third polylactic acid may be blended and then formed into a web.

The web will vary in its basis weight depending on the intended use of the air-through nonwoven fabric that is to be produced from the web, but in consideration of production efficiency, it preferably has a basis weight of between 10 and 60 g/m², and more preferably a basis weight of between 15 and 40 g/m².

The first air-through treatment in the method of producing an air-through nonwoven fabric of the invention is treatment with the aim of increasing the degree of crystallinity while inhibiting heat shrinkage of the composite fiber.

Increasing the degree of crystallinity of the composite fiber reduces heat shrinkage of the composite fiber during the subsequent second air-through treatment.

The first air-through treatment is carried out with temperature $T_1$ in the following range:

Glass transition temperature of second polylactic acid < $T_1$ < melting point of second polylactic acid.

Temperature $T_1$ is in the range of glass transition temperature of second polylactic acid < $T_1$ < melting point of second polylactic acid, preferably it is in the range of melting point of second polylactic acid - ~50°C ≤ $T_1$ ≤ melting point of second polylactic acid - ~10°C, and more preferably it is in the range of melting point of second polylactic acid - ~35°C ≤ $T_1$ ≤ melting point of second polylactic acid - ~15°C. If temperature $T_1$ is at or below the glass transition temperature of the second polylactic acid, crystallization of the second polylactic acid will not proceed, while if temperature $T_1$ is at or above the melting point of the second polylactic acid, heat shrinkage of the composite fiber will tend to be considerable. The glass transition temperature of polylactic acid is generally known to be in the range of about 50°C to about 60°C .

When the melting point of the second polylactic acid is about 130°C, temperature $T_1$ is preferably in the range of about 80°C to about 120°C, and more preferably in the range of about 95°C to about 115°C.

The first air-through treatment may be conducted using an air-through treatment device known in the art.

The time for the first air-through treatment is preferably between about 20 seconds and about 120 seconds, more preferably between about 30 seconds and about 100 seconds, and even more preferably between about 45 seconds and about 75 seconds. If the time is shorter than about 20 seconds the first air-through treatment will be insufficient and locations without increased crystallinity may be produced, while a time of longer than about 120 seconds is not preferred from the viewpoint of production efficiency.

The second air-through treatment in the method of producing an air-through nonwoven fabric of the invention is treatment in which the fibers are heat sealed to produce an air-through nonwoven fabric.

The second air-through treatment is carried out with temperature $T_2$ in the following range:

Melting point of seconds polylactic acid - ~5°C ≤ temperature $T_2$ < melting point of second polylactic acid + ~15°C.

Temperature $T_2$ is in the range of melting point of second polylactic acid - ~5°C ≤ temperature $T_2$ ≤ melting point of second polylactic acid + ~15°C, preferably it is in the range of melting point of second polylactic acid - ~5°C ≤ $T_2$ ≤ melting point of second polylactic acid + ~10°C, and more preferably it is in the range of melting point of second polylactic acid - ~5°C ≤ $T_2$ ≤ melting point of second polylactic acid + ~5°C. If temperature $T_2$ is below the melting point of the second polylactic acid - ~5°C, the nonwoven fabric will be soft but may have weak heat sealing and a tendency toward scuffing, while if temperature $T_2$ is above the melting point of the second polylactic acid + ~15°C, the fibers may undergo excessive heat sealing and the feel of the resulting air-through nonwoven fabric may be impaired.

When the melting point of the second polylactic acid is about 130°C, temperature $T_2$ is in the range of about 125°C to about 145°C, more preferably in the range of about 125°C to about 140°C, and even more preferably in the range of about 125°C to about 135°C.

The second air-through treatment may be conducted using an air-through treatment device known in the art.

The time for the second air-through treatment is preferably between about 20 seconds and about 120 seconds, more preferably between about 30 seconds and about 100 seconds, and even more preferably between about 45 seconds and about 75 seconds. If the time is shorter than about 20 seconds the second air-through treatment will be insufficient and locations without fused fibers may be produced, while a time of longer than about 120 seconds is not preferred from the viewpoint of production efficiency.

In the method of producing an air-through nonwoven fabric according to the invention, treatment of the web comprising composite fiber composed of the first polylactic acid and the second polylactic acid, which is divided into a first air-through treatment and a second air-through treatment, is believed to yield an air-through nonwoven fabric with low heat shrinkage and excellent feel for the following reasons.

(1) In the first air-through treatment, the web is subjected to temperature $T_1$ which is above the glass transition temperature of the second polylactic acid and below the melting point of the second polylactic acid, thereby inhibiting shrinkage of the second polylactic acid and allowing the degree of crystallinity to be increased. In addition, since the fibers do not fuse together even if the second polylactic acid has undergone shrinkage, a hard feel does not easily result. It is generally known that polymers with higher degrees of crystallinity have more stable physical properties and especially greater dimensional stability.

(2) Next, in the second air-through treatment, the web that has an increased degree of crystallinity by exposure to the first air-through treatment is exposed to temperature $T_2$ which is at or above the melting point of the second polylactic acid - ~5°C and no higher than the melting point of the second polylactic acid + ~15°C, to allow shrinkage of the fibers to be inhibited while fusing the fibers together.

If, on the other hand, the web is exposed to a temperature near the melting point of the second polylactic acid without pretreatment, as in conventional air-through treatment, it will be exposed to a temperature near the melting point of the second polylactic acid before crystallization of the second polylactic acid has fully proceeded, and therefore the fibers will contract either simultaneously with fusion of the fibers, or thereafter, resulting in increased heat shrinkage of the air-through nonwoven fabric and a harder feel.

This phenomenon is believed to occur because polylactic acid is a polymer with a high heat shrinkage factor, and because the crystallization speed is slow due to the rigidity of the main chain.

According to a different embodiment of the method of producing an air-through nonwoven fabric of the invention, the method of producing an air-through nonwoven fabric further comprises, before the step of producing a web containing the composite fibers, a step of annealing the fibers in the temperature range of the following temperature $T_3$: glass transition temperature of second polylactic acid < $T_3$ < $T_1$.

The annealing step can further increase the degree of crystallinity of the second polylactic acid before the second air-through treatment, and produce an air-through nonwoven fabric with lower heat shrinkage. Since the annealing step is carried out before forming the web, the effect of heat shrinkage produced during annealing step does not easily remain in the air-through nonwoven fabric.

Temperature $T_3$ is in the range of glass transition temperature of second polylactic acid < $T_3$ < $T_1$, preferably it is in the range of melting point of second polylactic acid - ~60°C $\leq T_3 \leq$ melting point of second polylactic acid - ~20°C, and more preferably it is in the range of melting point of second polylactic acid - ~50°C $\leq T_3 \leq$ melting point of second polylactic acid - ~30°C. If temperature $T_3$ is at or below the glass transition temperature of the second polylactic acid the annealing step will have no effect, and if temperature $T_3$ is higher than $T_1$, the first air-through treatment will have little effect.

When the melting point of the second polylactic acid is about 130°C, temperature $T_3$ is preferably in the range of about 70°C to about 110°C, and more preferably in the range of about 80°C to about 100°C.

The time for annealing step is between about 20 seconds and about 180 seconds, preferably between about 30 seconds and about 120 seconds, and most preferably between about 45 seconds and about 90 seconds. If the time is shorter than about 20 seconds, some locations may not receive sufficient annealing step, while a time of longer than about 180 seconds is not preferred from the viewpoint of production efficiency.

According to a different embodiment of the method of producing an air-through nonwoven fabric according to the invention, the annealing step may be carried out with temperature $T_3$ in the range of glass transition temperature of second polylactic acid < $T_3$ < melting point of second polylactic acid, preferably in the range of melting point of second polylactic acid - ~50°C $\leq T_1 \leq$ melting point of second polylactic acid - ~10°C, and more preferably in the range of melting point of second polylactic acid - ~35°C $\leq T_1 \leq$ melting point of second polylactic acid - ~15°C. In this embodiment, the higher temperature may be either Temperature $T_3$ or temperature $T_1$.

The annealing step may be carried out by contacting the raw stock of the composite fiber comprising the first polylactic acid and the second polylactic acid with hot air at temperature $T_3$ at a wind speed of about 1 to about 5 m/sec for between about 20 and 180 seconds.

Since the air-through nonwoven fabric has a high biomass percentage and is biodegradable, it can be suitably used in sanitary products, such as sanitary napkins and panty liners, sanitary materials, such as disposable diapers, urine leakage-preventing sheets, urine-absorbing pads for incontinent patients, body fluid/blood-absorbing medical goods, wound-dressing materials, cosmetic pack materials and animal excrement-treating materials, which products are intended for single use and are discarded after use.

Examples

The invention will now be explained in greater detail using examples and comparative examples, with the understanding that the invention is in no way limited by the examples.

The devices and evaluations used in the examples and comparative examples are as follows.

[Degree of crystallinity]

This was measured using an RAD-RB RU-200 X-ray diffraction analyzer by Rigaku Corp.

[Feel]

The feel of the produced air-through nonwoven fabric was organoleptically evaluated on the following scale.

G: Soft
P: Hard

[Nonwoven fabric thickness]

This was measured using a Thickness Gauge by Daiei Kagaku Seiki Manufacturing Co., Ltd., under conditions of load: 0.3 kPa (3 gf/cm$^2$), load area: 20 cm$^2$.

[Example 1]

Raw stock of Terramac PL80 (size: 2.2 dtex, cut length: 51 mm, crimping: 17/25 mm, hydrophilic lubricant: 0.4 mass%) by Unitika, Ltd. was prepared. PL80 is a core-sheath composite fiber with a biomass percentage of 100%, comprising a core composed of polylactic acid with a melting point of 170°C and a sheath composed of modified polylactic acid with a melting point of 130°C.

The raw stock was opened with a carding machine to produce a web with a basis weight of 20 g/m$^2$. The web was cut into a carded web with 200 mm length (MD) x 200 mm width (CD).

The carded web was placed on a DOP-18S support mesh and exposed to first air-through treatment using an air-through treatment apparatus (conveyor furnace length in heat treatment zone: 3 m) under conditions of 80°C, 1 minute, 1 m/sec wind speed, and the area was measured.

Next, the first air-through treated carded web was again placed on the DOP-18S support mesh and exposed to second air-through treatment with an air-through treatment apparatus under conditions of 135°C, 1 minute, 1 m/sec wind speed, to produce an air-through nonwoven fabric 1, and the area, degree of crystallinity and feel were evaluated.

The remaining area percentage of the air-through nonwoven fabric 1 was 50%, and the degree of crystallinity was 44%.

[Example 2]

Air-through nonwoven fabric 2 was produced in the same manner as Example 1, except that the Temperature for the first air-through treatment was changed to 95°C.

The remaining area percentage of the air-through nonwoven fabric 2 way 52%.

[Example 3]

Air-through Nonwoven fabric 3 was produced in the same manner as Example 1, except that the temperature for the first air-through treatment changed to 105°C.

The remaining area percentage of the air-through nonwoven fabric 3 was 54%, and the degree of crystallinity was 68%.

[Example 4]

Air-through nonwoven fabric 4 was produced in the same manner as Example 1, except that the temperature for the first air-through treatment was changed to 115°C.
The remaining area percentage of the air-through nonwoven fabric 4 was 50%, and the degree of crystallinity was 56%.

[Example 5]

Air-through nonwoven fabric 5 was produced in the same manner as Example 1, except that the temperature for the first air-through treatment was changed to 105°C, and the temperature for the second air-through treatment was changed to 125°C.
The remaining area percentage of the air-through nonwoven fabric 5 was 61%, and the degree of crystallinity was 53%.
The test conditions and results for Examples 1 to 5 are summarized in Table 1.

[Comparative Example 1]

Air-through nonwoven fabric 6 was produced in the same manner as Example 1, except that no first air-through treatment was carried out.
The remaining area percentage of the air-through nonwoven fabric 6 was 28%, and the degree of crystallinity was 38%.
The test conditions and results for Comparative Example 1 are summarized in Table 1.
| No. | Nonwoven fabric No. | First air-through treatment | | Second air-through treatment | | | | Nonwoven fabric thickness (mm) |
|---|---|---|---|---|---|---|---|---|
| | | Temperature | Remaining area percentage | Temperature | Remaining area percentage | Crystallization degree | Feel | |
| Example 1 | 1 | 80°C | 93% | 135°C | 50% | 44% | G | 1.2 |
| Example 2 | 2 | 95°C | 68% | 135°C | 52% | -* | G | 1.5 |
| Example 3 | 3 | 105°C | 64% | 135°C | 54% | 68% | G | 1.1 |
| Example 4 | 4 | 115°C | 52% | 135°C | 50% | 56% | G | 1.8 |
| Example 5 | 5 | 105°C | 64% | 125°C | 61% | 53% | G | 1.1 |
| Comp. Ex. 1 | 6 | - | - | 135°C | 28% | 38% | P | 1.3 |
| *Not measured | | | | | | | | |

Examples 1 to 5 demonstrate that conducting air-through treatment in two stages increases the remaining area percentage by 50% or more, and results in a soft feel. On the other hand, Comparative Example 1 shows that with air-through treatment, the remaining area percentage is low at 28.0% and a hard feel results.

In addition, Examples 1 to 5 and Comparative Example 1 indicate that a fixed correlation exists between the degree of crystallinity and the remaining area percentage, with a higher degree of crystallinity tending to result in a higher remaining area percentage.

[Example 6]

Raw stock of Terramac PL80 by Unitika, Ltd. was prepared. The raw stock was subjected to annealing step with an air-through treatment apparatus under conditions of 90°C, 1 minute, 3 m/sec wind speed.

The annealed raw stock was then opened with a carding machine to produce a web with a basis weight of 20 $g/m^2$. A carded web of 200 mm length (MD) x 200 mm width (CD) was obtained from the web.

The carded web was exposed to first air-through treatment and second air-through treatment under the same conditions as in Example 4, to produce air-through nonwoven fabric 7.

The remaining area percentage of air-through nonwoven fabric 7 was 83.8%, and therefore the remaining area percentage was increased by over 30% compared to air-through nonwoven fabric 4 produce in Example 4.

[Example 6 demonstrated that annealing step of raw stock significantly improves the remaining area percentage of an air-through nonwoven fabric.

[Example 7]

Raw stock of Terramac PL80 and raw stock of Terramac PL01, both by Unitika, Ltd., were prepared. The PL01 was fiber composed of polylactic acid with a melting point of 170°C, having a biomass percentage of 100%, and it had a size of 1.7 dtex, a cut length of 51 mm, crimping of 17/25 mm and a hydrophilic lubricant content of 0.4 mass%.

The PL80 and PL01 were loaded into a vinyl bag at a mass ratio of 80:20, the opening was gently closed, highpressure air was injected into the interior for temporary blending, and then a carding machine was used for opening, to obtain a lap. The lap was trisected, reoriented and then reloaded into the carding machine and opened, and this procedure was repeated again to produce a web with a basis weight of 20 $g/m^2$. A carded web of 200 mm length (MD) x 200 mm width (CD) was obtained from the web.

The carded web was exposed to first air-through treatment and second air-through treatment under the same conditions as in Example 4, to produce air-through nonwoven fabric 8.

The remaining area percentage of air-through nonwoven fabric 7 was 82.0%, and therefore the remaining area percentage was increased by over 30% compared to air-through nonwoven fabric 4 produced in Example 4.

Example 7 shows that blending of fibers composed of polylactic acid which has a high melting point and is resistant to heat shrinkage can inhibit heat shrinkage during air-through treatment.

**Claims**

1. A method of producing an air-through nonwoven fabric that comprises the steps of:

   forming a web comprising composite fibers comprising a first polylactic acid and a second polylactic acid having a lower melting point than the melting point of the first polylactic acid;
   exposing the web to a first air-through treatment in the temperature range of the following temperature $T_1$:
   Glass transition temperature of second polylactic acid < $T_1$ < melting point of second polylactic acid; and
   exposing the web that has been exposed to the first air-through treatment, to a second air-through treatment in the temperature range of the following temperature $T_2$:
   Melting point of second polylactic acid - 5°C $\leq T_2 \leq$ melting point of second polylactic acid + 15°C,
   wherein the degree of crystallinity of the air-through nonwoven fabric is in the range of 44% to 68%.

2. The method according to claim 1, wherein temperature $T_1$ is in the range of:

   Melting point of second polylactic acid - 50°C $\leq T_1$ < melting point of second polylactic acid - 10°C.

3. The method according to claim 1 or 2, wherein temperature $T_2$ is in the range of:

   Melting point of second polylactic acid - 5°C $\leq T_2 \leq$ melting point of second polylactic acid + 10°C.

4. The method according to any one of claims 1 to 3, wherein the step of exposure to the first air-through treatment and/or the step of exposure to the second air-through treatment is conducted for 20 to 120 seconds.

5. The method according to any one of claims 1 to 4, wherein the melting point of the second polylactic acid is 20°C to 60°C lower than the melting point of the first polylactic acid.

6. The method according to any one of claims 1 to 5, wherein the melting point of the first polylactic acid is in the range of 150°C to 190°C, and the melting point of the second polylactic acid is in the range of 110°C to 150°C.

7. The method according to any one of claims 1 to 6, wherein the remaining area percentage of the air-through nonwoven fabric is at least 40% with respect to the web.

8. The method according to any one of claims 1 to 7, wherein the biomass percentage of the air-through nonwoven fabric is in the range of 90-100%.

9. The method according to any one of claims 1 to 8, wherein the composite fibers are core-sheath composite fibers or side-by-side composite fibers.

10. The method according to any one of claims 1 to 9, wherein in the step of forming the web, a web is formed comprising the composite fibers and fibers of polylactic acid having a melting point that is higher than temperature $T_2$.

11. The method according to any one of claims 1 to 10, further comprising, before the step of forming the web, a step of annealing the fibers in the temperature range of the following temperature $T_3$: Glass transition temperature of second polylactic acid < $T_3$ < $T_1$.

12. An air-through nonwoven fabric that is produced from composite fibers comprising a first polylactic acid and a second polylactic acid having a lower melting point than the melting point of the first polylactic acid, by way of a web comprising the composite fibers, wherein the degree of crystallinity of the air-through nonwoven fabric is in the range of 44% to 68%.

13. The air-through nonwoven fabric according to claim 12, wherein the melting point of the second polylactic acid is 20°C to 60°C lower than the melting point of the first polylactic acid.

14. The air-through nonwoven fabric according to claim 12 or 13, wherein the melting point of the first polylactic acid is in the range of 150°C to 190°C, and the melting point of the second polylactic acid is in the range of 110°C to 150°C.

15. The method according to any one of claims 12 to 14, wherein the remaining area percentage of the air-through nonwoven fabric is at least 40% with respect to the web.

16. The method according to any one of claims 12 to 15, wherein the biomass percentage of the air-through nonwoven fabric is in the range of 90-100%.

17. The air-through nonwoven fabric according to any one of claims 12 to 16, wherein the composite fibers are core-sheath composite fibers or side-by-side composite fibers.

18. The air-through nonwoven fabric according to any one of claims 12 to 17, wherein the web further comprises fibers of polylactic acid having a melting point that is higher than temperature $T_2$.

## INTERNATIONAL SEARCH REPORT

| International application No. |
| --- |
| PCT/JP2011/053307 |

A. CLASSIFICATION OF SUBJECT MATTER
*D04H1/54(2006.01)i*

According to International Patent Classification (IPC) or to both national classification and IPC

B. FIELDS SEARCHED

Minimum documentation searched (classification system followed by classification symbols)
D04H1/00-18/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2003-519297 A (Kimberly-Clark Worldwide, Inc.),<br>17 June 2003 (17.06.2003),<br>claims; paragraphs [0013], [0022], [0029], [0032], [0036], [0043]<br>& WO 2001/049912 A1     & EP 1257703 A1<br>& US 2003/0022581 A1 | 12-18<br>1-11 |
| Y<br>A | JP 2002-315819 A (Takiron Co., Ltd.),<br>29 October 2002 (29.10.2002),<br>paragraph [0007]<br>(Family: none) | 12-18<br>1-11 |

| ☒ | Further documents are listed in the continuation of Box C. | ☐ | See patent family annex. |
| --- | --- | --- | --- |

| | |
| --- | --- |
| *    Special categories of cited documents:<br>"A"   document defining the general state of the art which is not considered<br>      to be of particular relevance<br>"E"   earlier application or patent but published on or after the international<br>      filing date<br>"L"   document which may throw doubts on priority claim(s) or which is<br>      cited to establish the publication date of another citation or other<br>      special reason (as specified)<br>"O"   document referring to an oral disclosure, use, exhibition or other means<br>"P"   document published prior to the international filing date but later than<br>      the priority date claimed | "T"   later document published after the international filing date or priority<br>      date and not in conflict with the application but cited to understand<br>      the principle or theory underlying the invention<br>"X"   document of particular relevance; the claimed invention cannot be<br>      considered novel or cannot be considered to involve an inventive<br>      step when the document is taken alone<br>"Y"   document of particular relevance; the claimed invention cannot be<br>      considered to involve an inventive step when the document is<br>      combined with one or more other such documents, such combination<br>      being obvious to a person skilled in the art<br>"&"   document member of the same patent family |

| Date of the actual completion of the international search<br>   15 April, 2011 (15.04.11) | Date of mailing of the international search report<br>   26 April, 2011 (26.04.11) |
| --- | --- |
| Name and mailing address of the ISA/<br>   Japanese Patent Office | Authorized officer |
| Facsimile No. | Telephone No. |

Form PCT/ISA/210 (second sheet) (July 2009)

## INTERNATIONAL SEARCH REPORT

| | International application No. |
|---|---|
| | PCT/JP2011/053307 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2004-143633 A  (Toray Industries, Inc.),<br>20 May 2004 (20.05.2004),<br>claims; paragraphs [0017], [0023], [0028],<br>[0040], [0056]<br>(Family: none) | 14,18 |
| A | JP 2008-101285 A  (Kao Corp.),<br>01 May 2008 (01.05.2008),<br>claims; paragraph [0024]<br>(Family: none) | 1-18 |
| A | JP 2004-100047 A  (Miki Tokushu Paper Mfg. Co.,<br>Ltd.),<br>02 April 2004 (02.04.2004),<br>claims; paragraph [0025]<br>(Family: none) | 1-18 |

Form PCT/ISA/210 (continuation of second sheet) (July 2009)

**EP 2 551 394 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7126970 A